# EUROPEAN PATENT APPLICATION

(11) **EP 4 826 790 A1**
(43) Date of publication of application: **21.10.2026**
(21) Application number: 24903641.9
(22) Date of filing: 06.12.2024
(51) Int. Cl.: H01M 4/48, C01B 33/029, H01M 4/36

(54) **NEGATIVE ELECTRODE ACTIVE MATERIAL AND METHOD FOR MANUFACTURING SAME**

(30) Priority: 13.12.2023 JP 2023210491; 19.09.2024 JP 2024162314
(71) Applicant: SHIN-ETSU CHEMICAL CO., LTD., Tokyo 100-0005 (JP)
(72) Inventor: AOKI, Shotaro, Annaka-shi, Gunma 379-0125 (JP); HIROSE, Takakazu, Annaka-shi, Gunma 379-0125 (JP); KOSHIKAWA, Hidenori, Annaka-shi, Gunma 379-0125 (JP); ISHIKAWA, Takuya, Annaka-shi, Gunma 379-0125 (JP); TAKAHASHI, Kohta, Annaka-shi, Gunma 379-0125 (JP); OSAWA, Yusuke, Annaka-shi, Gunma 379-0125 (JP)
(74) Representative: Schicker, Silvia
(86) International application number: PCT/JP2024/043267
(87) International publication number: WO 2025/126987

(57) **Abstract**

The present invention is a negative electrode active material having negative electrode active material particles, in which the negative electrode active material particles include a porous carbon structure, an amorphous low-valent nanosilicon oxide is dispersed inside the porous carbon structure, the low-valent nanosilicon oxide includes states where SiOx: x < 1.0, and at least a portion of the surface of the low-valent nanosilicon oxide exposed on the surface layer portion of the porous carbon structure is coated with a decomposition product and/or polymer of an organosilicon compound represented by the following general formula (1) :

Si(R¹)ₗ(R²)ₘ(R³)₄₋ₗ₋ₘ (1)

in which R¹ is an alkyl group having 1 to 20 carbon atoms, R² is an alkenyl group having 2 to 20 carbon atoms, R³ is an alkynyl group having 2 to 20 carbon atoms, and "1" and "m" each independently represent an integer of 0 to 4. This provides a negative electrode active material that can increase capacity while maintaining battery characteristics.

## Description

### TECHNICAL FIELD

The present invention relates to a negative electrode active material and a method for producing the same.

### BACKGROUND ART

In recent years, small electronic devices such as mobile terminals have become widespread, and there is a strong demand for them to be smaller, lighter, and have longer lifespans. In response to these market demands, development is underway of secondary batteries that are, in particular, small, lightweight, and capable of achieving high energy density. These secondary batteries are not limited to small electronic devices, and their application to large electronic devices such as automobiles and power storage systems such as for homes is also being considered.

Among these, lithium-ion secondary batteries are attracting great attention because of being easy to make small and have high capacity, and providing a higher energy density than lead-acid batteries and nickelcadmium batteries.

The above-described lithium-ion secondary batteries include a positive electrode, a negative electrode, a separator, and an electrolyte solution, and the negative electrode includes a negative electrode active material that is involved in the charge-discharge reaction.

While carbon-based active materials are widely used as negative electrode active materials, recent market demands have called for further improvements in battery capacity. To improve battery capacity, the use of silicon as a negative electrode active material is being considered. This is because the theoretical capacity of silicon (4199 mAh/g) is more than 10 times larger than the theoretical capacity of graphite (372 mAh/g), and a significant improvement in battery capacity can be expected. In developing silicon materials as negative electrode active materials, not only silicon itself, but also its alloys and compounds such as oxides are being considered. In addition, the active material shape in the case of carbon-based active materials is being considered, ranging from the standard coated type to an integrated type in which the material is deposited directly on the current collector.

However, using silicon as the primary raw material for the negative electrode active material causes the negative electrode active material to expand and contract during charging and discharging, thus making it prone to cracking, mainly near the surface layer thereof. In addition, ionic substances are generated within the active material, making it more susceptible to cracking. The surface layer of the negative electrode active material cracks, creating a new surface, and increasing the reactive area of the active material. In this case, a decomposition reaction of the electrolyte solution occurs on the new surface, and a film made of the decomposed electrolyte solution is formed on the new surface, consuming the electrolyte solution. This makes it more likely that cycle characteristics will deteriorate.

To date, various studies have been performed on silicon-based negative electrode active materials and electrode configurations for lithium-ion secondary batteries in order to improve the initial efficiency and cycle characteristics of the battery.

Specifically, in order to achieve favorable cycle characteristics and high safety, silicon and amorphous silicon dioxide are simultaneously deposited using a gas-phase method (see, for example, Patent Document 1). In addition, in order to achieve high battery capacity and safety, a carbon material (electron conductor) is provided on the surface layer of silicon oxide particles (see, for example, Patent Document 2). Further, to improve cycle characteristics and achieve high input-output performance, an active material containing silicon and oxygen is fabricated, and an active material layer with a high oxygen ratio near the current collector is formed (see, for example, Patent Document 3). In addition, to improve cycle characteristics, oxygen is incorporated into the silicon active material, and the active material layer is formed such that the average oxygen content is 40 at% or less and the oxygen content is higher near the current collector (see, for example, Patent Document 4).

In addition, to improve initial charge-discharge efficiency, a nanocomposite containing a Si phase, SiO₂, and M_{y}O metal oxide is used (see, for example, Patent Document 5). In addition, to improve cycle characteristics, SiOₓ (0.8 ≤ x ≤ 1.5, particle size range = 1 µm to 50 µm) is mixed with a carbon material and fired at high temperatures (see, for example, Patent Document 6). In addition, to improve cycle characteristics, the molar ratio of oxygen to silicon in the negative electrode active material is set to 0.1 to 1.2, and the active material is controlled such that the difference between the maximum and minimum molar ratios near the interface between the active material and the current collector is 0.4 or less (see, for example, Patent Document 7). In addition, to improve battery load characteristics, a lithium-containing metal oxide is used (see, for example, Patent Document 8). In addition, to improve cycle characteristics, a hydrophobic layer made of a silane compound or the like is formed on the surface layer of the silicon material (see, for example, Patent Document 9).

In addition, to improve cycle characteristics, silicon oxide is used and a graphite coating is formed on its surface layer to impart conductivity (see, for example, Patent Document 10). In Patent Document 10, the shift values obtained from the RAMAN spectrum of the graphite coating show broad peaks at 1330 cm⁻¹ and 1580 cm⁻¹, with their intensity ratio I₁₃₃₀/I₁₅₈₀ being 1.5 < I₁₃₃₀/I₁₅₈₀ < 3. In addition, to achieve high battery capacity and improve cycle characteristics, particles with a silicon microcrystalline phase dispersed in silicon dioxide are used (see, for example, Patent Document 11). In addition, to improve overcharge and overdischarge characteristics, silicon oxide is used in which the atomic ratio of silicon to oxygen is controlled to 1:y (0 < y < 2) (see, for example, Patent Document 12).

As for lithium-ion secondary batteries using silicon oxides, Hitachi Maxell, Ltd. began shipping in June 2010 prismatic lithium-ion secondary batteries for smartphones that use nanosilicon composites (see, for example, Non Patent Document 1). The silicon oxide proposed by Hohl is a composite material of Si⁰⁺ to Si⁴⁺ and has various oxidation states (Non Patent Document 2). In addition, Kapaklis proposed a disproportionated structure in which silicon oxide is separated into Si and SiO₂ by applying a thermal load (Non Patent Document 3).

Miyachi et al. focused on Si and SiO₂, which contribute to charging and discharging among silicon oxides with disproportionated structures (Non Patent Document 4), and Yamada et al. proposed the following reaction equation between silicon oxide and Li (Non Patent Document 5).

2SiO (Si + SiO₂) + 6.85Li+ + 6.85e⁻→ 1.4Li_{3.75}Si + 0.4Li₄SiO₄ + 0.2SiO₂

In the reaction equation, the Si and SiO₂ that constitute silicon oxide react with Li, resulting in separation into Li silicide, Li silicate, and partially unreacted SiO₂.

The Li silicate produced herein is commonly considered to be irreversible and stable, not releasing lithium once formed. The capacity per mass calculated from this reaction equation is close to the experimental value, and is recognized as the reaction mechanism for silicon oxide. Kim et al. identified the irreversible component associated with the charge and discharge of silicon oxide, Li silicate, as Li₄SiO₄ using ⁷Li-MAS-NMR and ²⁹Si-MAS-NMR (Non Patent Document 6).

This irreversible capacity is the weakest point of the silicon oxide, and improvement is needed. Kim et al. therefore used a Li pre-doping method to form Li silicate previously, significantly improving the initial efficiency of the battery and fabricating a negative electrode that can withstand practical use (Non Patent Document 7). In addition, rather than doping the electrode with Li, the method of treating the powder is proposed, resulting in improvement in the irreversible capacity (Patent Document 13).

On the other hand, the price of Li metal used for Li doping fluctuates significantly depending on market conditions, posing many challenges for industrialization. Accordingly, CVD-Si-C, which uses silane gas to create nanosilicon inside porous carbon, has achieved a higher energy density than Li-doped SiO (Patent Documents 14 and 15).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A
Patent Document 14: U.S. Patent No. 10,608,254 B2
Patent Document 15: U.S. Patent No. 11,165,054 B2

### NON PATENT LITERATURE

Non Patent Document 1: Journal "Denchi", Battery Association of Japan, May 1, 2010 issue, p. 10
Non Patent Document 2: A. Hohl, T. Wieder, P. A. van Aken, T. E. Weirich, G. Denninger, M. Vidal, S. Oswald, C. Deneke, J. Mayer, and H. Fuess : J. Non-Cryst. Solids, 320, (2003), 255.
Non Patent Document 3: V. Kapaklis, J. Non-Crystalline Solids, 354 (2008) 612
Non Patent Document 4: Mariko Miyachi, Hironori Yamamoto, and Hidemasa Kawai, J. Electrochem. Soc. 2007 volume 154, issue 4, A376-A380
Non Patent Document 5: M. Yamada, A. Inaba, A. Ueda, K. Matsumoto, T. Iwasaki, T. Ohzuku, J. Electrochem. Soc., 159, A1630 (2012)
Non Patent Document 6: Taeahn Kim, Sangjin Park, and Seung M. Oh, J. Electrochem. Soc. volume 154,(2007), A1112-A1117.
Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.
Non Patent Document 8: The Frontline of Development of Automotive Lithium-ion Batteries, pp. 96-111, CMC Publishing, published November 27, 2020

### SUMMARY OF INVENTION

### TECHNICAL PROBLEM

As described above, in recent years, small electronic devices such as mobile terminals have become increasingly powerful and multifunctional, and this has created a demand for increased battery capacity in the lithium-ion secondary batteries that serve as their main power sources. One method for solving this problem is the development of lithium-ion secondary batteries with negative electrodes primarily made of silicon materials.

In addition, lithium-ion secondary batteries using silicon materials are expected to have initial charge-discharge characteristics and cycle characteristics that are comparable to those of lithium-ion secondary batteries using carbon-based active materials. Therefore, using silicon oxide modified by the insertion and partial desorption of Li as the negative electrode active material has improved cycle characteristics and initial charge-discharge characteristics. Recently, incorporating Li into silicon oxide previously to form Li silicate reduces the irreversible capacity as a disadvantage of silicon oxide, and this has actually begun to be commercialized. A battery prototype in which this silicon oxide with Li used, that is, Li-SiO-C (Non Patent Document 8) completely replaces the carbon negative electrode material improves the capacity only in the upper 20% range compared to the carbon negative electrode material. This means that further improvements in battery capacity are required, considering the increasing performance of small electronic devices (such as 5G) and the increased driving range of electric vehicles.

Accordingly, CVD-Si-C, which has low irreversible capacity, has been developed, but it is known that highspeed charging and battery cycle characteristics are insufficient due to the reaction between Si and the electrolyte solution.

The present invention has been made in view of the above problems, and an object thereof is to provide a negative electrode active material that can increase capacity while maintaining battery characteristics.

### SOLUTION TO PROBLEM

To solve the above problems, the present invention provides a negative electrode active material comprising negative electrode active material particles, wherein the negative electrode active material particles include a porous carbon structure, an amorphous low-valent nanosilicon oxide is dispersed inside the porous carbon structure, the low-valent nanosilicon oxide includes states where SiOx:x < 1.0, and at least a portion of a surface layer portion of the low-valent nanosilicon oxide exposed on the surface of the porous carbon structure is coated with a decomposition product and/or polymer of an organosilicon compound represented by the following general formula (1):

Si(R¹)ₗ(R²)ₘ(R³)₄₋ₗ₋ₘ (1)

wherein R¹ is an alkyl group having 1 to 20 carbon atoms, R² is an alkenyl group having 2 to 20 carbon atoms, and R³ is an alkynyl group having 2 to 20 carbon atoms, and "l" and "m" each independently represent an integer of 0 to 4.

The negative electrode active material of the present invention has an amorphous low-valent nanosilicon oxide dispersed inside a porous carbon structure, and thus the presence of the porous carbon structure can reduce the adverse effects of expansion of the internal low-valent nanosilicon oxide. In addition, general SiO contains Si⁴⁺ as an irreversible component, but the negative electrode active material of the present invention includes states where SiOx: x < 1.0, thus making it possible to maintain a lower irreversible capacity than general SiO. In addition, the Si-O bond can suppress the decomposition of the electrolyte, thereby reducing the amount of SEI (Solid Electrolyte Interphase) deposited on the surface layer portion. In addition, coating the active site of the nanosilicon oxide with the decomposition product and/or polymer of the organosilicon compound can reduce the reactivity between the negative electrode active material and the electrolyte, thereby improving the cycle characteristics of the non-aqueous electrolyte secondary battery.

In this case, it is preferable that the organosilicon compound is represented by the general formula (1) wherein l = 0 to 3, and more particularly l = 0.

As described above, when the organosilicon compound is represented by the general formula (1) wherein l = 0 to 3, particularly l = 0, the reactivity between the negative electrode active material and the electrolyte can be reduced more effectively.

In addition, it is preferable that the decomposition product and/or polymer of the organosilicon compound coating the surface of the porous carbon structure include polyethylene or polyacetylene.

As described above, polyethylene or polyacetylene is included in the decomposition product and/or polymer of the organosilicon compound, thereby allowing reactivity with the electrolyte solution to be more effectively suppressed.

In addition, it is preferable that the decomposition product and/or polymer of the organosilicon compound coating the surface of the porous carbon structure include silicon.

As described above, silicon is included in the decomposition product and/or polymer of the organosilicon compound, thereby allowing reactivity with the electrolyte solution to be more effectively suppressed.

In addition, it is preferable that the thickness of the decomposition product and/or polymer of the organosilicon compound is 10 nm or less.

Such a thickness is preferable for improving cycle characteristics.

In addition, it is preferable that the surface of the porous carbon structure is coated in a mesh-like manner with the decomposition product and/or polymer of the organosilicon compound.

Such a coating configuration is preferable for improving cycle characteristics.

In addition, it is preferable that the low-valent nanosilicon oxide is substantially in a composite state of zero-valence, mono-valence, and di-valence.

As described above, the low-valent nanosilicon oxide is substantially in a composite state of zero-valence, mono-valence, and di-valence, thereby allowing an even lower irreversible capacity to be achieved.

In addition, a grain size of zero-valent Si constituting the low-valent nanosilicon oxide, calculated using Scherrer equation from peaks measured by X-ray diffraction measurement of the negative electrode active material particles, is preferably in the range of 1 nm to 5 nm.

Such a grain size of zero-valent Si that results in a substantially amorphous structure is preferable.

In addition, it is preferable that the porous carbon structure is predominantly Type I in the IUPAC classification and has a surface area of 1400 m²/g or more and a pore volume of 1 cm²/g or more.

The porous carbon structure corresponds to the IUPAC classification and has the surface area and pore volume as described above, thereby making it possible to achieve a negative electrode active material that efficiently includes a larger amount of low-valent nanosilicon oxide. In particular, the Type I structure in the IUPAC classification allows for smooth Si-O bond formation after deposition.

In addition, the low-valent nanosilicon oxide dispersed in the porous carbon structure can be configured such that x increases from a center to a surface layer of the porous carbon structure.

In the present invention, the low-valent nanosilicon oxide is dispersed in the porous carbon structure, and thus x tends to increase (the proportion of oxygen increases) from a center to a surface layer of the porous carbon structure during producing. While the oxidation ratio of silicon is high on the surface, thus more effectively suppressing the decomposition of the electrolyte solution, the oxidation ratio of silicon is low inside the active material, thus allowing an increase in the battery capacity.

In addition, the present invention is a method for producing a negative electrode active material having negative electrode active material particles, the method comprising the steps of:
providing a porous carbon structure;
flowing monosilane gas through the porous carbon structure under heating to deposit silicon inside the porous carbon structure;
cooling a material in which silicon is deposited inside the porous carbon structure to 50°C or less;
introducing, after the cooling, oxygen diluted with nitrogen gas into the material in which silicon is deposited inside the porous carbon structure under a condition where a temperature of the material in which silicon is deposited inside the porous carbon structure is adjusted to be maintained at 50°C or less, thereby converting at least a portion of the silicon into a low-valent nanosilicon oxide by oxidation reaction; and
bringing, after the oxidation reaction, the low-valent nanosilicon oxide into contact with an organosilicon compound represented by the following general formula (1) at 100 to 1000°C,

   Si(R¹)ₗ(R²)ₘ(R³)₄₋ₗ₋ₘ (1)

   wherein R¹ is an alkyl group having 1 to 20 carbon atoms, R² is an alkenyl group having 2 to 20 carbon atoms, R³ is an alkynyl group having 2 to 20 carbon atoms, and "l" and "m" each independently represent an integer of 0 to 4,
thereby producing a negative electrode active material in which an amorphous low-valent nanosilicon oxide is dispersed inside the porous carbon structure, and at least a portion of a surface layer portion of the low-valent nanosilicon oxide exposed on a surface of the porous carbon structure is coated with a decomposition product and/or polymer of an organosilicon compound.

With this method for producing the negative electrode active material, as described above, a negative electrode active material can be produced simply and efficiently in which the amorphous low-valent nanosilicon oxide is dispersed inside the porous carbon structure, and at least a portion of the surface layer portion of the low-valent nanosilicon oxide is coated with the decomposition product and/or polymer of the organosilicon compound.

### ADVANTAGEOUS EFFECTS OF INVENTION

The negative electrode active material of the present invention has the amorphous low-valent nanosilicon oxide dispersed inside the porous carbon structure, and thus the presence of the porous carbon structure reduces the adverse effects of expansion when the internal low-valent nanosilicon oxide expands. In addition, general SiO has Si⁴⁺ as an irreversible component, but the negative electrode active material of the present invention includes states where SiOx: x < 1.0, thus allowing a lower irreversible capacity than general SiO to be maintained. In addition, the Si-O bond can suppress the decomposition of the electrolyte solution, thus allowing decrease in the amount of a solid electrolyte interphase (SEI) deposited on the surface layer portion. In addition, coating the active site of the nanosilicon oxide with the decomposition product and/or polymer of the organosilicon compound can reduce the reactivity between the negative electrode active material and the electrolyte solution, thereby allowing improvement in the cycle characteristics of the non-aqueous electrolyte secondary battery.

In addition, the method for producing the negative electrode active material of the present invention allows the simple and efficient producing of a negative electrode active material in which the amorphous low-valent nanosilicon oxide is dispersed inside the porous carbon structure, and at least a portion of the surface layer portion of the low-valent nanosilicon oxide is coated with the decomposition product and/or polymer of the organosilicon compound.

### BRIEF DESCRIPTION OF DRAWINGS

[FIG. 1] is a cross-sectional view showing the configuration of a negative electrode including the negative electrode active material of the present invention;
[FIG. 2] is an exploded view showing an example configuration (laminated film type) of a lithium ion secondary battery including the negative electrode active material of the present invention;
[FIG. 3] is a graph showing the change in depth direction measurement in the O1s region during XPS measurement of the negative electrode active material in Example 1;
[FIG. 4] is the X-ray diffraction spectra of Examples 1, 2, 10, and 11;
[FIG. 5] is a flow chart showing an example of a method for producing the negative electrode active material of the present invention.

### DESCRIPTION OF EMBODIMENTS

The following describes embodiments of the present invention, but the present invention is not limited to these.

As described above, one method for increasing the battery capacity of lithium-ion secondary batteries has been investigated by using a negative electrode in which the low-valent nanosilicon oxide is used as the main material for the carbon structure, as the negative electrode of a lithium-ion secondary battery. It is desirable that a lithium-ion secondary battery using this active material have high battery capacity while exhibiting battery characteristics similar to those of lithium-ion secondary batteries using carbon-based active materials.

Accordingly, the present inventors performed extensive investigation to obtain a negative electrode active material that, when used as the negative electrode of a secondary battery, can achieve high cycle characteristics, improve initial charge-discharge characteristics, and increase battery capacity, resulting in the present invention.

In particular, CVD-Si-C, such as those disclosed in Patent Documents 14 and 15 is problematic in that the reaction with the electrolyte solution was excessive. In the present invention, in order to suppress such a reaction with the electrolyte solution, a negative electrode active material has been developed in which the Si portion is converted to a Si-O phase, and the siloxane bond unique to silicon oxide is used to allow not only significant suppression of the reaction decomposition of the electrolyte solution, but also allow fast charge to be ensured because the Si-O material with siloxane bonds has favorable acceptance of Li.

### [Negative electrode active material of present invention]

The negative electrode active material of the present invention is a negative electrode active material having negative electrode active material particles, wherein the negative electrode active material particles include a porous carbon structure, an amorphous low-valent nanosilicon oxide is dispersed inside the porous carbon structure, the low-valent nanosilicon oxide includes states where SiOx: x < 1.0, and at least a portion of the surface layer portion of the low-valent nanosilicon oxide exposed on the surface of the porous carbon structure is coated with a decomposition product and/or polymer of an organosilicon compound represented by the following general formula (1):

Si(R¹)ₗ(R²)ₘ(R³)₄₋ₗ₋ₘ (1)

wherein R¹ is an alkyl group having 1 to 20 carbon atoms, R² is an alkenyl group having 2 to 20 carbon atoms, R³ is an alkynyl group having 2 to 20 carbon atoms, and "l" and "m" each independently represent an integer of 0 to 4.

Such a negative electrode active material has an amorphous low-valent nanosilicon oxide dispersed inside the porous carbon structure, and thus the presence of the porous carbon structure can reduce the adverse effects of expansion of the internal low-valent nanosilicon oxide. In addition, general SiO contains Si⁴⁺ as an irreversible component, but the negative electrode active material of the present invention includes states where SiOx: x < 1.0, thus allowing a lower irreversible capacity than general SiO to be maintained. In addition, the Si-O bond can suppress the decomposition of the electrolyte solution, thus allowing a decrease in the amount of a solid electrolyte interphase (SEI) deposited on the surface layer portion. Note that in the present invention, the amorphous low-valent nanosilicon oxide may be dispersed inside the porous carbon structure, and a part of the nanosilicon oxide may be crystalline.

As described later, the negative electrode active material of the present invention can be produced as a Si-Ox material having siloxane bonds in the Si phase, in order to suppress the decomposition reaction of the electrolyte solution, which is not sufficiently suppressed by CVD-Si-C produced from general silane gas. The purpose of intentionally creating Si-O bonds is that while Si-Si bonds promote the decomposition of the electrolyte solution, Si-O bonds react with the electrolyte solution more slowly than Si-Si bonds. In addition, the Si-O bond can suppress the decomposition of the electrolyte solution, thus allowing a decrease in the amount of the SEI deposited on the surface layer portion of CVD-Si-C. As a result, battery cycle characteristics are improved. In addition, while grain boundaries in grains with Si-Si bonds reduce Li diffusion, Si-O bonds cause favorable Li diffusion, improving fast charge capabilities. The material of the present invention can be defined as CVD-SiOx-C, rather than CVD-Si-C, because the main component contributing to charging and discharging is a low-valent nanosilicon oxide. As described above, the fabricated active material can maintain the battery cycle characteristics while having high energy density and fast charge capabilities.

In addition, for the negative electrode active material of the present invention, at least a portion of the surface layer portion of the low-valent nanosilicon oxide exposed on the surface of the porous carbon structure is coated with the decomposition product and/or polymer of the organosilicon compound. This organosilicon compound is an organosilicon compound represented by the following general formula (1).

Si(R¹)ₗ(R²)ₘ(R³)₄₋ₗ₋ₘ (1)

(In the general formula (1), R¹ is an alkyl group having 1 to 20 carbon atoms, R² is an alkenyl group having 2 to 20 carbon atoms, R³ is an alkynyl group having 2 to 20 carbon atoms, and "l" and "m" each independently represent an integer of 0 to 4.)

In the general formula (1), R¹ is an alkyl group having 1 to 20 carbon atoms, preferably 1 to 10, and more preferably 1 to 4 carbon atoms.

Specific examples of the alkyl group of R¹ include: linear alkyl groups such as a methyl group, an ethyl group, a n-propyl group, a n-butyl group, a n-pentyl group, a n-hexyl group, a n-heptyl group, a n-octyl group, a n-nonyl group, a n-decyl group, a n-undecyl group, and a n-dodecyl group; and branched alkyl groups such as an isopropyl group, an isobutyl group, a sec-butyl group, a tert-butyl group, an isopentyl group, a neopentyl group, an isohexyl group, an isoheptyl group, an isooctyl group, a tert-octyl group, an isononyl group, an isodecyl group, and an isoundecyl group.

Among these, a methyl group, an ethyl group, and a n-propyl group are preferable from the viewpoint of ensuring the thermal decomposition properties of the organosilicon compound.

In the general formula (1), R² is an alkenyl group having 2 to 20 carbon atoms, preferably 2 to 10, and more preferably 2 to 5 carbon atoms.

Specific examples of the alkenyl group of R² include: linear alkenyl groups such as a vinyl group, a 1-propenyl group, a 1-butenyl group, a 1-pentenyl group, a 1-hexenyl group, a 1-heptenyl group, a 1-octenyl group, a 1-nonenyl group, a 1-decenyl group, a 1-undecenyl group, and a 1-dodecenyl group; and branched alkenyl groups such as an isopropenyl group, a 1-methyl-1-propenyl group, a 2-methyl-1-propenyl group, a 1-methyl-1-butenyl group, a 2-methyl-1-butenyl group, a 3-methyl-1-butenyl group, an isohexenyl group, an isoheptenyl group, an isooctenyl group, an isononyl group, an isodecenyl group, and an isoundecyl group.

Among these, a vinyl group and a 1-propenyl group are preferable from the viewpoint of ensuring the thermal decomposition properties of the organosilicon compound.

In the general formula (1), R³ represents an alkynyl group having 2 to 20 carbon atoms, preferably 2 to 10, and more preferably 2 to 5 carbon atoms.

Specific examples of the alkynyl group of R³ include: linear alkynyl groups such as an ethynyl group, a 1-propynyl group, a 1-butynyl group, a 1-n-pentynyl group, a 1-n-hexynyl group, a 1-n-heptynyl group, a 1-n-octinyl group, a 1-n-noninyl group, a 1-n-decynyl group, a 1-n-undecynyl group, and a 1-n-dodecynyl group; and branched alkynyl groups such as a 3-methyl-1-butynyl group, a 3,3-dimethyl-1-butynyl group, a 3-methyl-1-pentynyl group, a 4-methyl-1-pentynyl group, a 3,3-dimethyl-1-pentynyl group, a 3,4-methyl-1-pentynyl group, and a 4,4-dimethyl-1-pentynyl group.

Among these, an ethynyl group, a 1-propynyl group, and a 1-butynyl group are preferable from the viewpoint of ensuring the thermal decomposition properties of the organosilicon compound.

In the general formula (1), "l" and "m" each independently represent an integer of 0 to 4. From the viewpoint of ensuring the thermal decomposition properties of the organosilicon compound, it is preferable that in the general formula (1), l represents 0 to 3 and n represents 1 to 4.

Specific examples of the organosilicon compound represented by the general formula (1) include tetramethylsilane, trimethylvinylsilane, dimethyldivinylsilane, methyltrivinylsilane, tetravinylsilane, trimethylethynylsilane, diethynyldimethylsilane, methyltriethynylsilane, tetraethynylsilane, ethynyltrivinylsilane, diethynyldivinylsilane, triethynylvinylsilane, ethynyldimethylvinylsilane, trimethyl(1-propenyl)silane, dimethyldi(1-propenyl)silane, methyltri(1-propenyl)silane, tetra(1-propenyl)silane, trimethyl(1-propynyl)silane, dimethyldi(1-propynyl)silane, methyltri(1-propynyl)silane, tetra(1-propynyl)silane, trimethyl(1-butynyl)silane, dimethyldi(1-butynyl)silane, methyltri(1-butynyl)silane, and tetra(1-butynyl)silane.

The active site of the nanosilicon oxide is coated with the decomposition product and/or polymer of the organosilicon compound, thereby allowing reduction in the reactivity between the negative electrode active material and the electrolyte solution, and as a result, the cycle characteristics of the non-aqueous electrolyte secondary battery can be improved.

The decomposition product or polymer of the organosilicon compound of the present invention is used to identify the original organosilicon compound, because it is difficult to identify the state of the compound after decomposition or polymerization. The organosilicon compound in the state before decomposition or polymerization can be easily identified by the above formula (1).

In addition, the tetravalent Si constituting SiO is an irreversible component, and thus for the negative electrode active material of the present invention, it is preferable that the low-valent nanosilicon oxide be substantially in a composite state of zero-valence, mono-valence, and di-valence. In particular, it is preferable that the low-valent nanosilicon oxide is substantially predominantly monovalent and divalent. When divalent or lower SiOx is predominant, the irreversible capacity is larger than that of silicon alone, but a lower irreversible capacity than that of general SiO can be maintained.

The organosilicon compound that forms the decomposition product or polymer, which is a coating in the negative electrode active material particles of the negative electrode active material of the present invention, is preferably represented by the above general formula (1) wherein l = 0 to 3. That is, it is preferable that the organosilicon compound essentially has an alkenyl group or an alkynyl group. Further, it is more preferable that l = 0. That is, it is preferable that the organosilicon compound does not have an alkyl group and has one or both of an alkenyl group and an alkynyl group. The coating with the decomposition product and/or polymer of the organosilicon compound can more effectively suppress reactivity with the electrolyte solution.

In addition, for the negative electrode active material particles of the negative electrode active material of the present invention, it is preferable that the decomposition product and/or polymer of the organosilicon compound coated on the surface of the porous carbon structure include polyethylene or polyacetylene. Polyethylene or polyacetylene is included in the decomposition product and/or polymer of the organosilicon compound, thereby allowing more effective suppression of reactivity with the electrolyte solution.

In addition, for the negative electrode active material particles of the negative electrode active material of the present invention, it is preferable that the decomposition product and/or polymer of the organosilicon compound coated on the surface of the porous carbon structure include silicon. As described above, silicon is included in the decomposition product and/or polymer of the organosilicon compound, thereby allowing more effective suppression of reactivity with the electrolyte solution.

In addition, for the negative electrode active material particles of the negative electrode active material of the present invention, it is preferable that the thickness of the decomposition product and/or polymer of the organosilicon compound is 10 nm or less. Such a thickness is preferable for improving cycle characteristics.

In addition, for the negative electrode active material particles of the negative electrode active material of the present invention, it is preferable that the surface of the porous carbon structure is coated in a mesh-like manner with the decomposition product and/or polymer of the organosilicon compound. Such a coating configuration is preferable for improving cycle characteristics.

For the negative electrode active material of the present invention, the grain size of zero-valent Si constituting the low-valent nanosilicon oxide, calculated using Scherrer equation from the peak measured by X-ray diffraction measurement of the negative electrode active material particles, is preferably in the range of 1 nm to 5 nm. Such a grain size of zero-valent Si that results in a substantially amorphous structure is preferable.

Crystallite size calculation by XRD can be performed, for example, under the following conditions. For broad peaks, calculation can be performed using the analysis software TOPAS, for example, under the following conditions.

### XRD Measurement

- Apparatus: D2 PHASER, manufactured by Bruker Corporation
- X-ray source: Cu
- Divergence slit: 0.5°
- Incidence-side soller: 4°
- Receiving-side soller: 4°

### Crystallite size calculation

- Analysis software: DIFFRAC. TOPAS
- Analysis method: peak fitting method
- Emission profile: CuKa5.lam
- Function: FP (First Principle) function
- Refinement option: select "Calculate Error" and "Use Extrapolation"

The valence of the low-valent nanosilicon oxide can be quantified using NMR (nuclear magnetic resonance) and XPS (X-ray photoelectron spectroscopy).

NMR measurement when determining the valence of the low-valent nanosilicon oxide can be performed, for example, under the following conditions.
²⁹Si MAS NMR (Magic angle spinning nuclear magnetic resonance)
- Apparatus: 700 NMR spectrometer, manufactured by Bruker Corporation
- Probe: 4 mm HR-MAS rotor, 50 µL
- Sample rotation speed: 10 kHz
- Measurement environment temperature: 25°C

XPS measurements can be performed, for example, under the following conditions.

### XPS

- Apparatus: X-ray photoelectron spectrometer
- X-ray source: monochromatic Al Kαrays
- X-ray spot diameter: 100 µm
- Ar ion gun sputtering condition: 0.5 kV, 2 mm × 2 mm

In addition, for the negative electrode active material of the present invention, it is preferable that x of the low-valent nanosilicon oxide dispersed in the porous carbon structure increases from the center to the surface layer of the porous carbon structure. In the present invention, the low-valent nanosilicon oxide is dispersed in the porous carbon structure, and thus during producing, x tends to increase from the center to the surface layer of the porous carbon structure (the proportion of oxygen increases). While a high oxidation ratio of silicon on the surface causes the decomposition of the electrolyte solution to be more effectively suppressed, a low oxidation ratio of silicon inside the active material allows a further increase in the battery capacity.

### <Negative electrode for non-aqueous electrolyte secondary battery>

Then, the configuration of a negative electrode for a non-aqueous electrolyte secondary battery (hereinafter also referred to as "negative electrode") including the negative electrode active material of the present invention will be described.

### [Negative electrode configuration]

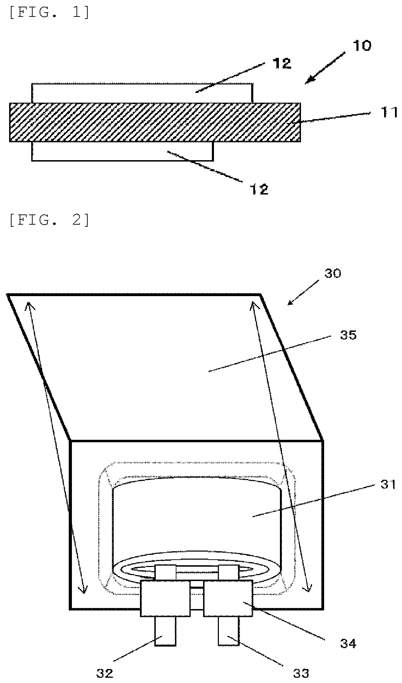

FIG. 1 shows a cross-sectional view of a negative electrode including the negative electrode active material of the present invention. As shown in FIG. 1, a negative electrode 10 has a negative electrode active material layer 12 on a negative electrode current collector 11. This negative electrode active material layer 12 may be provided on both sides or only one side of the negative electrode current collector 11. Further, the negative electrode current collector 11 may be omitted in the negative electrode of the non-aqueous electrolyte secondary battery of the present invention.

### [Negative electrode current collector]

The negative electrode current collector 11 is an excellent conductive material and includes the material excellent in mechanical strength. Examples of the conductive materials that can be used for the negative electrode current collector 11 include copper (Cu) and nickel (Ni). Preferably, this conductive material does not form an intermetallic compound with lithium (Li).

The negative electrode current collector 11 preferably includes carbon (C) and sulfur (S) in addition to the main elements. This is because the physical strength of the negative electrode current collector is improved. In particular, the current collector has an active material layer that expands during charging and includes these elements, which is effective in suppressing deformation of the electrode including the current collector. The contents of the above elements included are not particularly limited, and it is preferable that the content of each element is 100 ppm by mass or less. This is because a greater deformation suppression effect can be obtained. Such deformation suppression effect can further improve cycle characteristics.

In addition, the surface of the negative electrode current collector 11 is preferably roughened, and the ten-point average roughness Rz of the surface is preferably 1.5 µm or more and 5 µm or less. The roughened negative electrode current collector is, for example, a metal foil that has been electrolytically treated, embossed, or chemically etched.

### [Negative electrode active material layer]

The negative electrode active material layer 12 may include a plurality of types of negative electrode active materials, such as carbon-based active materials, in addition to the silicon-based active material particles of the present invention. Further, depending on the battery design, other materials such as a thickener (also referred to as a "binder") and a conductive additive may be included.

### [Negative electrode active material and method for producing negative electrode]

Then, an example of a negative electrode active material for a non-aqueous electrolyte secondary battery of the present invention and a method for producing a negative electrode using the same will be described.

First, the method for producing the negative electrode active material included in the negative electrode will be explained. The method for producing a negative electrode active material of the present invention is a method for producing a negative electrode active material having negative electrode active material particles, the method including the steps of:
providing a porous carbon structure;
flowing monosilane gas through the porous carbon structure under heating to deposit silicon inside the porous carbon structure;
cooling a material in which silicon is deposited inside the porous carbon structure to 50°C or less;
introducing, after the cooling, oxygen diluted with nitrogen gas into the material in which silicon is deposited inside the porous carbon structure under a condition where a temperature of the material in which silicon is deposited inside the porous carbon structure is adjusted to be maintained at 50°C or less, thereby converting at least a portion of the silicon into a low-valent nanosilicon oxide by oxidation reaction; and
bringing, after the oxidation reaction, the low-valent nanosilicon oxide into contact with an organosilicon compound represented by the following general formula (1) at 100 to 1000°C,

   Si(R¹)ₗ(R²)ₘ(R³)₄₋ₗ₋ₘ (1)

   wherein R¹ is an alkyl group having 1 to 20 carbon atoms, R² is an alkenyl group having 2 to 20 carbon atoms, R³ is an alkynyl group having 2 to 20 carbon atoms, and "l" and "m" each independently represent an integer of 0 to 4,
thereby producing a negative electrode active material in which an amorphous low-valent nanosilicon oxide is dispersed inside the porous carbon structure, and at least a portion of a surface layer portion of the low-valent nanosilicon oxide exposed on a surface of the porous carbon structure is coated with a decomposition product and/or polymer of an organosilicon compound.

With this method for producing the negative electrode active material, as described above, a negative electrode active material can be produced simply and efficiently in which an amorphous low-valent nanosilicon oxide is dispersed inside the porous carbon structure, and at least a portion of the surface layer portion of the low-valent nanosilicon oxide is coated with the decomposition product and/or polymer of the organosilicon compound.

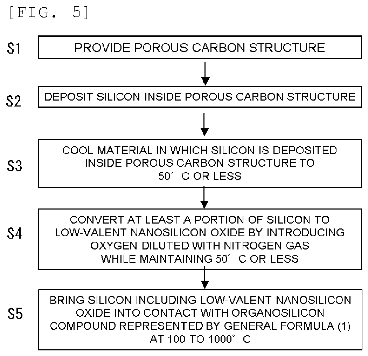

Each of the steps of the method for producing the negative electrode active material will be described with reference to steps S1 to S5 in FIG. 5.

First, this step is a step of providing a porous carbon structure (Step S1). The porous carbon structure provided herein preferably has carbon-carbon double bonds at least in a part. In addition, it is preferable that the porous carbon structure provided herein is predominantly Type I in the IUPAC classification and has a surface area of 1400 m²/g or more and a pore volume of 1 cm³/g or more. Using such IUPAC classification, surface area, and pore volume allows silicon to be deposited more efficiently and in larger quantities. In addition, for the IUPAC classification, surface area, and pore volume, the following measurement method can be used.
- Specific surface area and pore size distribution are measured using a TriStar II Plus analyzer manufactured by Shimadzu Corporation by a constant volume method based on gas adsorption. The conditions are as follows.
- Gas used: nitrogen
- Environment: liquid nitrogen
- Pressure operating range: P/P0
- Adsorption: 0 to 0.998
- Desorption: 0.998 to 0.10
- Pretreatment: vacuum, 200°C, 1 hour

Then, silicon is deposited inside the porous carbon structure by flowing monosilane gas through the porous carbon structure provided in the step S1 under heating (step S2).

Note that after the step S1 and before the step S2, it is preferable to place the porous carbon structure in a vacuum container and perform vacuum evacuation. The vacuum level can be reduced to, for example, approximately -100 kPa, but is not limited to this. In addition, after vacuum evacuation, it is preferable that the pressure is restored with nitrogen and heating is performed to approximately 350 to 450°C using an external heater while nitrogen is flowing. This heating can be performed for 5 minutes to one hour. Performing this vacuum evacuation and preheating in the presence of nitrogen allows nucleation for silicon deposition in the step S2 and removal of hydrogen and water adhering to the porous carbon structure, thus ensuring more reliable silicon deposition in the step S2.

The silicon deposition in the step S2 can be performed by flowing monosilane gas at, for example, approximately 400°C to 500°C. The deposition period can be, for example, 30 minutes to 10 hours.

Then, the material in which silicon is deposited inside the porous carbon structure is cooled to 50°C or less (step S3). In this step, it is preferable to perform cooling while flowing nitrogen gas, for example. This cooling allows, for example, cooling to ambient temperature.

After the above cooling (step S3), under a condition where a temperature of the material in which silicon is deposited inside the porous carbon structure is adjusted to be maintained at 50°C or less, oxygen diluted with nitrogen gas is then introduced into the material in which silicon is deposited inside the porous carbon structure, thereby converting at least a portion of the silicon into the low-valent nanosilicon oxide (step S4). This step allows the formation of Si-O bonds. Note that more preferably, the temperature maintained herein is 35°C or less.

The dilution factor of oxygen with nitrogen can be, for example, 5 to 50, and preferably 10 to 30. This dilution factor can typically be 20.

In addition, in this step S4, when the internal temperature rises and exceeds 50°C, silicon dioxide is generated in some portions, which is undesirable as a negative electrode active material. Therefore, in this step S4, it is necessary to adjust the temperature of the material to maintain 50°C or less. In addition, in the step S4, the material temperature is, for example, preferably 25°C or more, and more preferably 30°C or more, in order to facilitate the oxidation reaction and the formation of Si-O bonds.

The oxidation period in this step S4 (flow period of oxygen diluted with nitrogen gas) can be, for example, 30 minutes or more and 5 hours or less, and preferably one hour or more and three hours or less. In addition, after the flow of oxygen diluted with nitrogen gas, the flow can be switched to nitrogen gas, and further cooling can be performed. The flow of nitrogen gas alone can be, for example, 30 minutes or more and two hours or less.

For the oxidation by flowing oxygen diluted with nitrogen gas as described above, it is preferable to adjust the low-valent nanosilicon oxide dispersed in the porous carbon structure such that x increases from the center to the surface layer of the porous carbon structure. Note that for the porous carbon structure, the pore structure tends to have a large cross-sectional area at the particle surface and a decreasing cross-sectional area towards the interior of the particle. Therefore, as in the present invention, performing oxidation by flowing oxygen diluted with nitrogen gas causes x to naturally tend to increase from the center to the surface layer of the porous carbon structure.

Then, after the oxidation reaction in the step S4, the low-valent nanosilicon oxide is brought into contact with the organosilicon compound represented by the following general formula (1) at 100 to 1000°C (step S5).

Si(R¹)ₗ(R²)ₘ(R³)₄₋ₗ₋ₘ (1)

(In the general formula (1), R¹ is an alkyl group having 1 to 20 carbon atoms, R² is an alkenyl group having 2 to 20 carbon atoms, and R³ is an alkynyl group having 2 to 20 carbon atoms. In addition, "l" and "m" each independently represent an integer of 0 to 4.)

The contact in this step S5 can be performed, for example, by mixing the organosilicon compound represented by the general formula (1) and the porous carbon structure in which the low-valent nanosilicon oxide is dispersed, in the same container as in the step S4, and then heating. However, this is not limited to the above, as long as the contact between the two is made and the material is coated with the decomposition product and/or polymer of the organosilicon compound.

Then, the material is removed from the container. Through the above steps, a negative electrode active material can be produced in which the amorphous low-valent nanosilicon oxide is dispersed inside the porous carbon structure, and at least a portion of the surface of the low-valent nanosilicon oxide exposed on the surface layer portion of the porous carbon structure is coated with the decomposition product and/or polymer of the organosilicon compound.

### <Lithium-ion secondary battery>

Then, a laminate film-type lithium-ion secondary battery will be explained as a specific example of a non-aqueous electrolyte secondary battery including the negative electrode active material of the present invention as described above.

### [Configuration of laminate film-type secondary battery]

A laminate film-type lithium-ion secondary battery 30 shown in FIG. 2 mainly includes a wound electrode body 31 housed inside a sheet-shaped exterior member 35. This wound electrode body 31 has a separator between the positive electrode and negative electrode and is wound. In addition, there is a case where a separator is placed between the positive electrode and negative electrode and a laminate is housed. In both electrode bodies, a positive electrode lead 32 is attached to the positive electrode, and a negative electrode lead 33 is attached to the negative electrode. The outermost periphery of the electrode body is protected by protective tape.

The positive and negative electrode leads 32 and 33 extend in one direction, for example, from the inside to the outside of the exterior member 35. The positive electrode lead 32 is formed, for example, from a conductive material such as aluminum, and the negative electrode lead 33 is formed, for example, from a conductive material such as nickel or copper.

The exterior member 35 is, for example, a laminate film in which a fusion layer, a metal layer, and a surface protection layer are laminated in this order, and for the laminate film, the outer peripheral edges of the fusion layers of the two films are fused together or bonded with an adhesive such that the fusion layer faces the electrode body 31. The fusion portion is, for example, a film such as polyethylene or polypropylene, and the metal portion is, for example, aluminum foil. The protection layer is, for example, nylon.

An adhesive film 34 is inserted between the exterior member 35 and the positive and negative electrode leads to prevent outside air from entering. This material is, for example, polyethylene, polypropylene, or polyolefin resin.

The positive electrode has a positive electrode active material layer on one or both sides of the positive electrode current collector, similar to the negative electrode 10 in FIG. 1.

The positive electrode current collector is formed of a conductive material such as aluminum.

The positive electrode active material layer includes one or more positive electrode materials capable of absorbing and releasing lithium ions, and may also include other materials such as a positive electrode binder, a positive electrode conductive additive, and a dispersant, depending on the design. In this case, details of the positive electrode binder and positive electrode conductive additive are the same as those for the negative electrode binder and negative electrode conductive additive already described, for example.

A lithium-containing compound is desirable as the positive electrode material. Examples of the lithium-containing compound include composite oxides made of lithium and transition metal elements, or phosphate compounds having lithium and transition metal elements. Among these positive electrode materials, compounds having at least one of nickel, iron, manganese, and cobalt are preferable. These are represented as chemical formulae such as LiₓM₁O₂ or Li_{y}M₂PO₄. In this formula, M₁ and M₂ represent at least one transition metal element. The values of x and y vary depending on the battery charge-discharge state, but are commonly represented as 0.05 ≤ x ≤ 1.10 and 0.05 ≤ y ≤ 1.10.

Examples of the composite oxide having lithium and transition metal elements include lithium cobalt composite oxide (LiₓCoO₂), lithium nickel composite oxide (LiₓNiO₂), and lithium nickel cobalt composite oxide. Examples of the lithium nickel cobalt composite oxide include lithium nickel cobalt aluminum composite oxide (NCA) and lithium nickel cobalt manganese composite oxide (NCM).

Examples of the phosphate compound having lithium and transition metal elements include lithium iron phosphate compound (LiFePO₄) and lithium iron manganese phosphate compound (LiFe₁₋ᵤMnᵤPO₄ (0 < u < 1)). The use of these positive electrode materials can achieve high battery capacity and excellent cycle characteristics.

### [Negative electrode]

The negative electrode has a configuration similar to the negative electrode 10 for lithium-ion secondary batteries shown in FIG. 1 as described above, and has, for example, negative electrode active material layers on both sides of the current collector. It is preferable that this negative electrode has a larger negative electrode charge capacity than the electrical capacity (charge capacity as a battery) obtained from the positive electrode active material agent. This can suppress the deposition of lithium metal on the negative electrode.

The positive electrode active material layer is provided on some of both surfaces of the positive electrode current collector, and similarly, the negative electrode active material layer is provided on some of both surfaces of the negative electrode current collector. In this case, for example, the negative electrode active material layer provided on the negative electrode current collector has an area without facing positive electrode active material layer. This is to ensure a stable battery design.

The area where the negative electrode active material layer and positive electrode active material layer do not face each other is hardly affected by charge and discharge. Therefore, the state of the negative electrode active material layer is maintained immediately after formation, thereby allowing the composition of the negative electrode active material to be accurately and reproducibly examined regardless of charging or discharging.

### [Separator]

The separator separates the positive electrode and negative electrode, preventing short circuits caused by contact of both electrodes while allowing lithium ions to pass therethrough. This separator is formed, for example, from a porous membrane composed of synthetic resin or ceramic, and may have a laminate structure with two or more of porous membranes laminated. Examples of the synthetic resin include polytetrafluoroethylene, polypropylene, and polyethylene.

### [Electrolyte solution]

At least some of the active material layer or the separator is impregnated with a liquid electrolyte (electrolyte solution). This electrolyte solution includes an electrolyte salt dissolved in a solvent and may include other materials such as additives.

As the solvent, for example, a non-aqueous solvent can be used. Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, and tetrahydrofuran. Among these, it is desirable to use at least one of ethylene carbonate, propylene carbonate, dimethyl carbonate, diethyl carbonate, and ethyl methyl carbonate. This is because more favorable characteristics can be obtained. In addition, in this case, more advantageous characteristics can be obtained by combining a high-viscosity solvent such as ethylene carbonate or propylene carbonate with a low-viscosity solvent such as dimethyl carbonate, ethyl methyl carbonate, or diethyl carbonate. This is because the dissociation property and ion mobility of the electrolyte salt are improved.

When an alloy-based negative electrode is used, it is particularly desirable for the solvent to include at least one of a halogenated chain carbonate or a halogenated cyclic carbonate. This allows a stable coating to form on the surface of the negative electrode active material during charge and discharge, particularly during charging. Herein, the halogenated chain carbonate is a chain carbonate that has a halogen as a constituent element (at least one hydrogen is substituted with a halogen). In addition, the halogenated cyclic carbonate is a cyclic carbonate that has a halogen as a constituent element (at least one hydrogen is substituted with a halogen).

The type of halogen is not particularly limited, and fluorine is preferable. This is because the coating having a more favorable quality is formed as compared with other halogens. In addition, the larger number of halogens are desirable. This is because the resulting coating is more stable and the decomposition reaction of the electrolyte solution is reduced.

Examples of the halogenated chain carbonate include fluoromethyl methyl carbonate and difluoromethyl methyl carbonate. Examples of the halogenated cyclic carbonate include 4-fluoro-1,3-dioxolan-2-one and 4,5-difluoro-1,3-dioxolan-2-one.

An unsaturated carbon-bond cyclic carbonate ester is preferably included as the solvent additive. This is because a stable coating is formed on the surface of the negative electrode during charge and discharge, suppressing the decomposition reaction of the electrolyte solution. Examples of the unsaturated carbon-bond cyclic carbonate ester include vinylene carbonate and vinylethylene carbonate.

In addition, a sultone (cyclic sulfonate ester) is preferably included as the solvent additive. This is because the chemical stability of the battery is improved. Examples of the sultone include propane sultone and propene sultone.

Further, it is preferable that the solvent includes an acid anhydride. This is because the chemical stability of the electrolyte solution is improved. Examples of the acid anhydride include propanedisulfonic acid anhydride.

The electrolyte salt can include one or more light metal salts, such as lithium salts. Examples of the lithium salt include lithium hexafluorophosphate (LiPF₆) and lithium tetrafluoroborate (LiBF₄).

The content of the electrolyte salt in the solvent is preferably 0.5 mol/kg or more and 2.5 mol/kg or less. This is because high ionic conductivity can be obtained.

### EXAMPLES

Hereinafter, the present invention will be described in more detail below with reference to examples and comparative examples of the present invention, and the present invention is not limited to these examples.

### (Example 1)

A negative electrode active material was fabricated according to the following procedure, and a laminate film-type lithium-ion secondary battery 30 as shown in FIG. 2 was further fabricated.

The negative electrode active material was produced as follows. First, a porous carbon material (porous carbon structure) having a surface area (BET specific surface area) of 2483 m²/g, a pore volume of 1.35 cm³/g, and a particle diameter (D50) of 11 µm, and being of IUPAC classification Type I was provided. This porous carbon material was placed in a vacuum container and evacuated to -90 kPa. Then, the pressure was restored with nitrogen, and heating was performed to 400°C using an external heater while nitrogen was flowing. After completion of 30 minutes of heating, the temperature was raised to 415°C, monosilane gas was flowed and deposited for 4 hours. Then, cooling was performed to ambient temperature while nitrogen gas was flowed. After lowering the temperature to 25°C, oxygen diluted 20-fold with nitrogen was introduced, and the material temperature was adjusted to 50°C or less to form Si-O bonds. Then, nitrogen including oxygen was flowed for two hours, and was switched to nitrogen gas when the material temperature reached 30°C or less, and the flow was continued for 60 minutes. Subsequently, 1.0 [mass%] trimethylvinylsilane (TMVS) relative to the porous carbon material was added to the container, and heating was performed at 400°C for two hours. After cooling to ambient temperature, the material was removed from the container and used as the negative electrode active material.

### [Fabrication of negative electrode]

The negative electrode active material fabricated as described above (Active material including CVD-SiOx-C), graphite, a conductive additive 1 (carbon nanotube (CNT)), a conductive additive 2 (carbon fine particles with a median diameter of approximately 50 nm), sodium polyacrylate, and carboxymethyl cellulose (hereinafter referred to as CMC) were mixed in a dry mass ratio of 9.3:83.7:1:1:4:1, and then diluted with pure water to prepare a negative electrode mixture slurry.

In addition, electrolytic copper foil with a thickness of 15 µm was used as the negative electrode current collector. This electrolytic copper foil included carbon and sulfur each at a concentration of 70 ppm by mass. Finally, the negative electrode mixture slurry was applied to the negative electrode current collector and dried in a vacuum atmosphere at 100°C for 1 hour. After completion of drying, the amount of the negative electrode active material layer deposited per unit area on one surface of the negative electrode (also referred to as the area density) was 7.0 mg/cm².

### [Assembly of test coin cell]

Then, ethylene carbonate (EC) and dimethyl carbonate (DMC) were mixed as solvents, and then the electrolyte salt (lithium hexafluorophosphate: LiPF₆) was dissolved to prepare an electrolyte solution. In this case, the solvent composition was EC:DMC = 30:70 by volume, and the electrolyte salt content was 1 mol/kg with respect to the solvent. Vinylene carbonate (VC) and fluoroethylene carbonate (FEC) were added as additives in amounts of 1.0 mass% and 2.0 mass%, respectively.

Then, a coin cell was assembled as follows. First, a 1 mm thick Li foil was punched out to a diameter of 16 mm and attached to an aluminum clad.

Then, the negative electrode obtained above was punched out to a diameter of 15 mm, which was placed opposite a Li foil attached to an aluminum clad via a separator, and the electrolyte solution was injected and then a 2032 coin battery was fabricated.

### [Measurement of first-cycle efficiency]

First-cycle efficiency was measured under the following conditions. First, the coin battery prepared for first-cycle efficiency testing was charged (first-cycle charge) in CCCV mode at a charge rate equivalent to 0.03 C. The CV was 0 V and the cut-off current was 0.04 mA. Then, CC discharge (first-cycle discharge) was performed at a discharge rate of 0.03 C and a discharge cut-off voltage of 1.2 V.

When initial charge-discharge characteristics were investigated, the first-cycle efficiency (hereinafter, may be referred to as initial efficiency) was calculated. The first-cycle efficiency was calculated using the formula represented as: first-cycle efficiency (%) = (first-cycle discharge capacity / first-cycle charge capacity) × 100.

### [Manufacturing of lithium-ion secondary battery and battery evaluation]

Based on the initial data obtained, a counter positive electrode was designed to achieve a negative electrode utilization rate of 95%. The utilization rate was calculated using the following formula from the positive and negative electrode capacities obtained with the Li counter electrode. 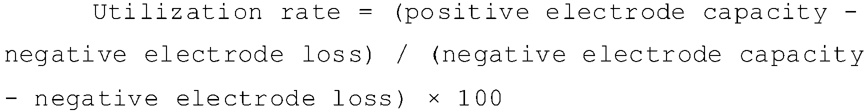 Utilization rate = (positive electrode capacity - negative electrode loss)/(negative electrode capacity - negative electrode loss) × 100

Based on this design, each of the lithium-ion secondary batteries of the Examples and Comparative Examples (such as lithium-ion secondary battery shown in FIG. 2) was manufactured. Battery evaluation was performed for each of the lithium-ion secondary batteries of the Examples and Comparative Examples.

Cycle characteristics were investigated as follows. First, to stabilize the battery, two charge-discharge cycles were performed at 0.2 C in an atmosphere of 25°C, and the discharge capacity after the second cycle was measured. The battery cycle characteristics were calculated from the discharge capacity after the third cycle, and the battery test was stopped after 1000 cycles. Charge-discharge was performed at a charge rate of 0.7 C and a discharge rate of 0.5 C. The charge voltage was 4.3 V, the discharge cut-off voltage was 2.5 V, and the charge cut-off rate was 0.07 C.

The thickness of the decomposition product and/or polymer was investigated by observing the porous carbon structure in the negative electrode active material particles using TEM.

The film shape of the decomposition product and/or polymer was investigated by observing the porous carbon structure in the negative electrode active material particles using SEM-EDX.

The result of each measurement is shown in Table 1. Table 1 also shows the results for Comparative Examples 1 and 2 and Examples 2 to 12, which will be described later.

**[Table 1]**

| | Organosilicon compound | Amount used (mass%) | Thickness of decomposition product and/or polymer (nm) | Coating shape of decomposition product and/ or polymer | Valence of SiOx | Grain size of Si 0+ (nm) | Surface area (porous carbon) (m²/g) | Total pore volume (porous carbon) (cm³/g) | IUPAC classification | 1000-cycle capacity retention (%) | Single-cell capacity at 1.2V (mAh/g) | First-cycle efficiency at 1.2V (%) |
|---|---|---|---|---|---|---|---|---|---|---|---|---|
| Comparative Example 1 | - | - | - | - | Valence of 0 to 2 0<x<0.7 | 1.4 | 2483 | 1.35 | I | 70 | 1940 | 88 |
| Comparative Example 2 | TMVS | 1.0 | 5 | Mesh-like | Valence of 0 x=0 | 1.4 | 2483 | 1.35 | I | 65 | 1960 | 90 |
| Example 1 | TMVS | 1.0 | 5 | Mesh-like | Valence of 0 to 2 0<x<0.7 | 1.4 | 2483 | 1.35 | I | 86 | 1912 | 85 |
| Example 2 | TMVS | 0.5 | 3 | Mesh-like | Valence of 0 to 2 0<x<0.7 | 1.4 | 2483 | 1.35 | I | 83 | 1929 | 86 |
| Example 3 | TMVS | 1.5 | 8 | Mesh-like | Valence of 0 to 2 0<x<0.7 | 1.4 | 2483 | 1.35 | I | 84 | 1903 | 84 |
| Example 4 | TMVS | 2.0 | 10 | Mesh-like | Valence of 0 to 2 0<x<0.7 | 1.4 | 2483 | 1.35 | I | 84 | 1895 | 82 |
| Example 5 | TVSI | 1.0 | 5 | Mesh-like | Valence of 0 to 2 0<x<0.7 | 1.4 | 2483 | 1.35 | I | 86 | 1930 | 86 |
| Example 6 | TEVS | 1.0 | 5 | Mesh-like | Valence of 0 to 2 0<x<0.7 | 1.4 | 2483 | 1.35 | I | 82 | 1927 | 86 |
| Example 7 | TMSI | 1.0 | 5 | Mesh-like | Valence of 0 to 2 0<x<0.7 | 1.4 | 2483 | 1.35 | I | 81 | 1935 | 87 |
| Example 8 | TMVS | 4.0 | 20 | Mesh-like | Valence of 0 to 2 0<x<0.7 | 1.4 | 2483 | 1.35 | I | 82 | 1910 | 85 |
| Example 9 | TMVS | 1.0 | 5 | Sea-island-like | Valence of 0 to 2 0<x<0.7 | 1.4 | 2483 | 1.35 | I | 83 | 1920 | 86 |
| Example 10 | TMVS | 1.0 | 5 | Mesh-like | Valence of 0 to 2 0<x<0.7 | 3 | 2483 | 1.35 | I | 82 | 1931 | 84 |
| Example 11 | TMVS | 1.0 | 5 | Mesh-like | Valence of 0 to 2 0<x<0.7 | 1.4 | 1687 | 0.99 | I | 83 | 1913 | 85 |
| Example 12 | TMVS | 1.0 | 5 | Mesh-like | Valence of 0 to 2 0<x<0.7 | 1.4 | 2330 | 2.85 | II | 81 | 1915 | 84 |

### (Comparative Example 1)

A negative electrode active material was produced in the same manner as in Example 1, except that the steps of adding 1.0 [mass%] trimethylvinylsilane (TMVS) relative to the porous carbon material and heating at 400°C for 2 hours were not performed. The obtained negative electrode active material was evaluated in the same manner as in Example 1.

The negative electrode active material of Comparative Example 1 exhibited poor cycle characteristics because the low-valent nanosilicon oxide exposed on the surface of the porous carbon structure was not coated with the decomposition product and/or polymer of the organosilicon compound.

### (Comparative Example 2)

A porous carbon structure similar to that in Example 1 was provided. Then, in the same conditions as in Example 1, amorphous silicon was formed from the surface layer to the vicinity of the center of the porous carbon structure particles at 415°C using monosilane gas. This state includes Si-H bonds, and thus the temperature was raised to 435°C for Si-Si formation to stabilize the Si-Si bond. Then, 1.0 [mass%] trimethylvinylsilane (TMVS) relative to the porous carbon material was added in a container and heating was performed at 400°C for 2 hours. After cooling to ambient temperature, cooling was performed to room temperature and the sample was removed under the atmosphere. Using this method allows fabrication of the material without the low-valent silicon oxide compound (unlike the present invention). The obtained negative electrode active material was evaluated using the same method as in Example 1.

The negative electrode active material of Comparative Example 2 lacked the low-valent silicon oxide compound, resulting in high capacity and initial Coulombic efficiency, but the reactivity with the electrolyte solution was high, leading to poor battery cycle characteristics.

### (Examples 2 to 4)

The negative electrode active material was produced in the same manner as in Example 1, except that the amount of trimethylvinylsilane (TMVS) used was changed as shown in Table 1 above. The obtained negative electrode active material was evaluated in the same manner as in Example 1.

### (Example 5)

A negative electrode active material was produced in the same manner as in Example 1, except that trimethylvinylsilane (TMVS) was changed to tetravinylsilane (TVSI). The obtained negative electrode active material was evaluated in the same manner as in Example 1.

### (Example 6)

The negative electrode active material was produced in the same manner as in Example 1, except that trimethylvinylsilane (TMVS) was changed to triethinylvinylsilane (TEVS). The obtained negative electrode active material was evaluated in the same manner as in Example 1.

### (Example 7)

A negative electrode active material was produced in the same manner as in Example 1, except that trimethylvinylsilane (TMVS) was changed to tetramethylsilane (TMSI). The obtained negative electrode active material was evaluated in the same manner as in Example 1.

For the negative electrode active materials of Examples 1 to 6, at least a portion of the surface layer portion of the low-valent nanosilicon oxide exposed on the surface of the porous carbon structure is coated with the decomposition product and/or polymer of the organosilicon compound including polyethylene or polyacetylene, thereby suppressing reactivity with the electrolyte solution. Therefore, the cycle characteristics of Examples 1 to 6 are superior to those of Comparative Example 1.

For the negative electrode active materials of Examples 1 to 7, at least a portion of the surface layer portion of the low-valent nanosilicon oxide exposed on the surface of the porous carbon structure is coated with the decomposition product and/or polymer of the organosilicon compound including silicon, thereby suppressing reactivity with the electrolyte solution. Therefore, the cycle characteristics of Examples 1 to 7 are superior to those of Comparative Example 1.

### (Example 8)

A negative electrode active material was produced in the same manner as in Example 1, except that the amount of trimethylvinylsilane (TMVS) used was changed as shown in Table 1 above. The obtained negative electrode active material was evaluated in the same manner as in Example 1.

The cycle characteristics of Example 8 are improved compared to Comparative Example 1. This result shows that even when the thickness of the decomposition product and/or polymer exceed 10 nm, the cycle characteristics improve. In contrast, the cycle characteristics of Example 8 are poorer than those of Examples 1 to 4. This result suggests that it is desirable for the thickness of the decomposition product and/or polymer to be 10 nm or less.

### (Example 9)

A negative electrode active material was produced in the same manner as in Example 1, except that 1.0 [mass%] of trimethylvinylsilane (TMVS) relative to the porous carbon material was added in a container and heating was performed at 600°C for 2 hours. The obtained negative electrode active material was evaluated in the same manner as in Example 1.

The cycle characteristics of Example 9 are improved compared to Comparative Example 1. This result shows that the cycle characteristics are improved although the surface of the porous carbon structure is coated in a sea-island-like manner with the decomposition product and/or polymer of the silicon compound. In contrast, the cycle characteristics of Example 9 are poorer than those of Example 1. This result suggests that it is desirable for the surface of the porous carbon structure to be coated in a mesh-like manner with the decomposition product and/or polymer of the silicon compound.

### (Example 10)

A negative electrode active material was produced by changing the conditions for the porous carbon structure similar to that in Example 1, as follows. First, the temperature was raised to 415°C, monosilane gas was flowed and deposited for 4 hours. Then, the temperature was raised to grow the Si^{O+} grain size. Thereafter, cooling was performed to ambient temperature while flowing nitrogen gas. After lowering the temperature to 25°C, oxygen diluted 20-fold with nitrogen was introduced, and the material temperature was adjusted to 50°C or less to form Si-O bonds. Then, nitrogen including oxygen was flowed for 2 hours, and was switched to nitrogen gas when the material temperature became 30°C or less, and the flow continued for 60 minutes. Subsequently, 1.0 [mass%] trimethylvinylsilane (TMVS) was added to the porous carbon material in the container and heated at 400°C for 2 hours. After cooling to ambient temperature, the material was removed from the container and used as the negative electrode active material. The obtained negative electrode active material was evaluated using the same method as in Example 1.

From the results of the results of Example 10, the cycle characteristics are more improved, as the structure is closer to an amorphous structure.

### (Examples 11 and 12)

A negative electrode active material was produced in the same manner as in Example 1, except that the porous carbon structure provided initially was changed as shown in Table 1 above. The obtained negative electrode active material was evaluated in the same manner as in Example 1.

The results of the results of Examples 11 and 12 suggest that desirably, the pore volume is 1 cm³/g or more, the BET specific surface area is 1400 m²/g or more, and the IUPAC classification is Type I.

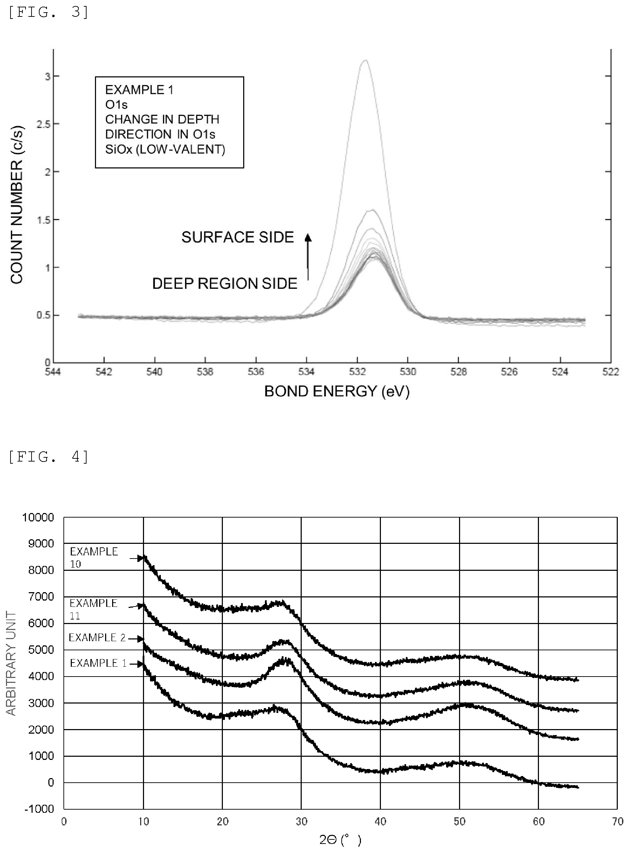

FIG. 3 shows the change in the depth direction measurement of the O1s region in the XPS measurement of the negative electrode active material in Example 1. As can be seen from FIG. 3, the O1s peak decreases in the depth direction from the surface, indicating that the oxygen concentration decreases from the surface towards the deeper region.

FIG. 4 shows the X-ray diffraction spectra of Examples 1, 2, 10, and 11. In all of these, a peak was observed around 2θ= 28°, and this peak was used to calculate the silicon crystallite size. The same applies to the other examples and comparative examples.

The present description includes the following embodiments.
[1]: A negative electrode active material comprising negative electrode active material particles, wherein
   the negative electrode active material particles include a porous carbon structure,
   an amorphous low-valent nanosilicon oxide is dispersed inside the porous carbon structure,
   the low-valent nanosilicon oxide includes states where SiOx: x < 1.0, and
   at least a portion of a surface layer portion of the low-valent nanosilicon oxide exposed on a surface of the porous carbon structure is coated with a decomposition product and/or polymer of an organosilicon compound represented by the following general formula (1):

      Si(R¹)ₗ(R²)ₘ(R³)₄₋ₗ₋ₘ (1)

      wherein R¹ is an alkyl group having 1 to 20 carbon atoms, R² is an alkenyl group having 2 to 20 carbon atoms, and R³ is an alkynyl group having 2 to 20 carbon atoms, and "l" and "m" each independently represent an integer of 0 to 4.
[2]: The negative electrode active material of the above [1], wherein the organosilicon compound is represented by the general formula (1) wherein l = 0 to 3.
[3]: The negative electrode active material of the above [2], wherein the organosilicon compound is represented by the general formula (1) wherein l = 0.
[4]: The negative electrode active material of any of the above [1] to [3], wherein the decomposition product and/or polymer of the organosilicon compound coating the surface of the porous carbon structure includes polyethylene or polyacetylene.
[5]: The negative electrode active material of any of the above [1] to [4], wherein the decomposition product and/or polymer of the organosilicon compound coating the surface of the porous carbon structure includes silicon.
[6]: The negative electrode active material of any of the above [1] to [5], wherein a thickness of the decomposition product and/or polymer of the organosilicon compound is 10 nm or less.
[7]: The negative electrode active material of any of the above [1] to [6], wherein the surface of the porous carbon structure is coated in a mesh-like manner with the decomposition product and/or polymer of the organosilicon compound.
[8]: The negative electrode active material of any of the above [1] to [7], wherein the low-valent nanosilicon oxide is substantially in a composite state of zero-valence, mono-valence, and di-valence.
[9]: The negative electrode active material of any of the above [1] to [8], wherein a grain size of zero-valent Si constituting the low-valent nanosilicon oxide, calculated using Scherrer equation from peaks measured by X-ray diffraction measurement of the negative electrode active material particles, is in a range of 1 nm to 5 nm.
[10]: The negative electrode active material of any of the above [1] to [9], wherein the porous carbon structure is predominantly Type I in the IUPAC classification and has a surface area of 1400 m²/g or more and a pore volume of 1 cm²/g or more.
[11]: The negative electrode active material of any of the above [1] to [10], wherein the low-valent nanosilicon oxide dispersed in the porous carbon structure has an increasing x value from a center to a surface layer of the porous carbon structure.
[12]: A method for producing a negative electrode active material having negative electrode active material particles, the method comprising the steps of:
   providing a porous carbon structure;
   flowing monosilane gas through the porous carbon structure under heating to deposit silicon inside the porous carbon structure;
   cooling a material in which silicon is deposited inside the porous carbon structure to 50°C or less;
   introducing, after the cooling, oxygen diluted with nitrogen gas into the material in which silicon is deposited inside the porous carbon structure under a condition where a temperature of the material in which silicon is deposited inside the porous carbon structure is adjusted to be maintained at 50°C or less, thereby converting at least a portion of the silicon into a low-valent nanosilicon oxide by oxidation reaction; and
   bringing, after the oxidation reaction, the low-valent nanosilicon oxide into contact with an organosilicon compound represented by the following general formula (1) at 100 to 1000°C,

      Si(R¹)ₗ(R²)ₘ(R³)₄₋ₗ₋ₘ (1)

      wherein R¹ is an alkyl group having 1 to 20 carbon atoms, R² is an alkenyl group having 2 to 20 carbon atoms, R³ is an alkynyl group having 2 to 20 carbon atoms, and "l" and "m" each independently represent an integer of 0 to 4,
   thereby producing a negative electrode active material in which an amorphous low-valent nanosilicon oxide is dispersed inside the porous carbon structure, and at least a portion of a surface layer portion of the low-valent nanosilicon oxide exposed on a surface of the porous carbon structure is coated with a decomposition product and/or polymer of an organosilicon compound.

Note that the present invention is not limited to the above-described embodiments. The above-described embodiments are merely examples, and anything that has substantially the same configuration as the technical concept described in the claims of the present invention and exhibits similar effects is within the technical scope of the present invention.

## Claims

1. A negative electrode active material comprising negative electrode active material particles, wherein
the negative electrode active material particles include a porous carbon structure,
an amorphous low-valent nanosilicon oxide is dispersed inside the porous carbon structure,
the low-valent nanosilicon oxide includes states where SiOx: x < 1.0, and
at least a portion of a surface layer portion of the low-valent nanosilicon oxide exposed on a surface of the porous carbon structure is coated with a decomposition product and/or polymer of an organosilicon compound represented by the following general formula (1):
Si(R¹)ₗ(R²)ₘ(R³)₄₋ₗ₋ₘ (1)
wherein R¹ is an alkyl group having 1 to 20 carbon atoms, R² is an alkenyl group having 2 to 20 carbon atoms, and R³ is an alkynyl group having 2 to 20 carbon atoms, and "l" and "m" each independently represent an integer of 0 to 4.

2. The negative electrode active material according to claim 1, wherein the organosilicon compound is represented by the general formula (1) wherein l = 0 to 3.

3. The negative electrode active material according to claim 2, wherein the organosilicon compound is represented by the general formula (1) wherein l = 0.

4. The negative electrode active material according to claim 1, wherein the decomposition product and/or polymer of the organosilicon compound coating the surface of the porous carbon structure includes polyethylene or polyacetylene.

5. The negative electrode active material according to claim 1, wherein the decomposition product and/or polymer of the organosilicon compound coating the surface of the porous carbon structure includes silicon.

6. The negative electrode active material according to claim 1, wherein a thickness of the decomposition product and/or polymer of the organosilicon compound is 10 nm or less.

7. The negative electrode active material according to claim 1, wherein the surface of the porous carbon structure is coated in a mesh-like manner with the decomposition product and/or polymer of the organosilicon compound.

8. The negative electrode active material according to claim 1, wherein the low-valent nanosilicon oxide is substantially in a composite state of zero-valence, mono-valence, and di-valence.

9. The negative electrode active material according to claim 1, wherein a grain size of zero-valent Si constituting the low-valent nanosilicon oxide, calculated using Scherrer equation from peaks measured by X-ray diffraction measurement of the negative electrode active material particles, is in a range of 1 nm to 5 nm.

10. The negative electrode active material according to claim 1, wherein the porous carbon structure is predominantly Type I in the IUPAC classification and has a surface area of 1400 m²/g or more and a pore volume of 1 cm²/g or more.

11. The negative electrode active material according to claim 1, wherein the low-valent nanosilicon oxide dispersed in the porous carbon structure has an increasing x value from a center to a surface layer of the porous carbon structure.

12. A method for producing a negative electrode active material having negative electrode active material particles, the method comprising the steps of:
providing a porous carbon structure;
flowing monosilane gas through the porous carbon structure under heating to deposit silicon inside the porous carbon structure;
cooling a material in which silicon is deposited inside the porous carbon structure to 50°C or less;
introducing, after the cooling, oxygen diluted with nitrogen gas into the material in which silicon is deposited inside the porous carbon structure under a condition where a temperature of the material in which silicon is deposited inside the porous carbon structure is adjusted to be maintained at 50°C or less, thereby converting at least a portion of the silicon into a low-valent nanosilicon oxide by oxidation reaction; and
bringing, after the oxidation reaction, the low-valent nanosilicon oxide into contact with an organosilicon compound represented by the following general formula (1) at 100 to 1000°C,
Si(R¹)ₗ(R²)ₘ(R³)₄₋ₗ₋ₘ (1)
wherein R¹ is an alkyl group having 1 to 20 carbon atoms, R² is an alkenyl group having 2 to 20 carbon atoms, R³ is an alkynyl group having 2 to 20 carbon atoms, and "l" and "m" each independently represent an integer of 0 to 4,
thereby producing a negative electrode active material in which an amorphous low-valent nanosilicon oxide is dispersed inside the porous carbon structure, and at least a portion of a surface layer portion of the low-valent nanosilicon oxide exposed on a surface of the porous carbon structure is coated with a decomposition product and/or polymer of an organosilicon compound.
